# EUROPEAN PATENT SPECIFICATION

(11) **EP 3 180 558 B1**
(45) Date of publication and mention of the grant of the patent: **30.12.2020**
(21) Application number: 15756282.8
(22) Date of filing: 13.08.2015
(51) Int. Cl.: F21Y 115/10, F21V 5/04, F21V 23/04, F21V 23/00, F21L 4/00, H05B 47/11, H05B 45/10

(54) **LIGHTING DEVICE WITH AMBIENT LIGHT SENSOR**
BELEUCHTUNGSVORRICHTUNG MIT UMGEBUNGSLICHTSENSOR
DISPOSITIF D'ÉCLAIRAGE À CAPTEUR DE LUMIÈRE AMBIANTE

(30) Priority: 15.08.2014 US 201414461256
(43) Date of publication of application: 21.06.2017
(73) Proprietor: Phase Final, Inc., Irvine, CA 92602 (US)
(72) Inventor: HOANG, Vuong, Irvine, California 92602 (US)
(74) Representative: Petty, Catrin Helen
(86) International application number: PCT/US2015/045137
(87) International publication number: WO 2016/025761

(56) References cited:
- WO-A1-2008/070977
- US-A1- 2005 099 798
- US-B1- 7 410 271
- "Petzl Nao headlamp - technical notice", , 5 February 2013 (2013-02-05), XP055222189, Retrieved from the Internet: URL:http://web.archive.org/web/20130205011 500/http://www.petzl.com/files/all/technic al-notice/headlamps/E36_NAO.pdf [retrieved on 2015-10-20]

## Description

### BACKGROUND

### Field of the Invention

The present invention generally relates to lighting devices with ambient light sensors.

### Related Art

Lighting devices, such as flashlights, headlamps, and others, typically include various mechanical and/or electrical structures used to illuminate areas of interest. A user may wish to adjust the output level of light produced by such devices in many environments.

For example, in certain tactical situations, the user may wish to adjust light output levels to provide an appropriately low or high light level depending on changing conditions. As another example, when wearing a night-vision device, the user may be acutely sensitive to changes in lighting conditions. As such, quick adjustments to light output levels of the lighting device are important for the user to see clearly without being blinded by oversaturated lighting conditions.

Although some conventional lighting devices may permit the user to adjust light output levels, existing implementations are often inconvenient or impractical, especially in changing environments (e.g., if lighting conditions change frequently). For example, some tactical situations may preclude the user from having sufficient time, focus, or dexterity to manually adjust light output levels.

Petzl Nao Headlamp - technical notice discloses a rechargeable headlamp with reactive lighting technology.

US 2005/0099798 A1 discloses a wearable light device for providing additional light for activities in low light. The device includes a wearable mount including a light system and power source. The light system includes one or more arrays of light sources, such as light-emitting diodes. A photo sensor detects ambient light or emitted light returned from a reflective surface and causes a control circuit to dim light emission.

US 2008/0198586 A1 discloses a flashlight with automatic light intensity adjustment means. The flashlight comprises a flashlight casing, a light source, a switch, a light controlling circuit on a printed circuit board and a power source. A sensor component is attached to the flashlight casing. The sensor component comprises a sensor casing and an incident light intensity sensor disposed therein. The sensor is electronically connected to the light source, the switch, the light controlling circuit and the power source. The light controlling circuit controls electrical current passing through the light source according to intensity of incident light as detected by the sensor so that more current is passed through the light source when a lower intensity of incident light is detected, and less current is passed through the light source when a higher intensity of incident light is detected.

WO 2008/070977 A1 discloses a method and apparatus for digitally controlling a lighting device which enables a desired lighting device operational set point to be reached in a rapid manner while substantially reducing overshoot and oscillation about the desired lighting device operational set point. In particular, a proportional-integral-derivative (PID) controller is configured to vary the PID controller parameters based on a relationship based at least in part on the desired lighting device operational set point, the present lighting device operational point or both.

### SUMMARY

In accordance with a first aspect of the invention, there is provided a lighting device (100) according to independent claim 1.

In accordance with a second aspect of the invention, there is provided a method of operating a lighting device (100) according to independent claim 7.

The scope of the invention is defined by the claims. A more complete understanding of embodiments of the present disclosure will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE FIGURES

Fig. 1A illustrates a perspective view of a lighting device in accordance with an embodiment of the disclosure.
Fig. 1B illustrates a side view of the lighting device of Fig. 1A in accordance with an embodiment of the disclosure.
Fig. 1C illustrates a front view of the lighting device of Fig. 1A in accordance with an embodiment of the disclosure.
Fig. ID illustrates an exploded perspective view of the lighting device of Fig. 1A in accordance with an embodiment of the disclosure.
Fig. 2A illustrates a perspective view of another lighting device in accordance with an embodiment of the disclosure.
Fig. 2B illustrates a side view of the lighting device of Fig. 2A in accordance with an embodiment of the disclosure.
Fig. 2C illustrates a front view of the lighting device of Fig. 2A in accordance with an embodiment of the disclosure.
Fig. 2D illustrates an exploded perspective view of the lighting device of Fig. 2A in accordance with an embodiment of the disclosure.
Fig. 3 is a block diagram illustrating various components of a lighting device in accordance with an embodiment of the disclosure.
Fig. 4 is a flow chart illustrating a process for selecting an operating mode of a lighting device in accordance with an embodiment of the disclosure.
Fig. 5 is a flow chart illustrating a process for adjusting a projected light level of a lighting device in accordance with an embodiment of the disclosure.
Fig. 6 is a flow chart illustrating an initialization process for controlling a projected light level of a lighting device in accordance with an embodiment of the disclosure.
Fig. 7 is a flow chart illustrating a process for determining a direction and rate of projected light level adjustment of a lighting device in accordance with an embodiment of the disclosure.
Fig. 8 illustrates projected light levels of a lighting device being adjusted over time in accordance with an embodiment of the disclosure.

Embodiments of the present disclosure and their advantages are best understood by referring to the detailed description that follows. It should be appreciated that like reference numerals are used to identify like elements illustrated in one or more of the figures.

### DETAILED DESCRIPTION

In accordance with the embodiments provided herein, a lighting device is implemented to automatically adjust a projected light level based on ambient light detected at a sensor. Such a lighting device includes a controller configured to determine whether illumination measurements provided by the sensor are within a desired range of illumination levels. If the illumination measurements are not within the desired range of illumination levels, the controller may adjust the projected light level of the lighting device through a plurality of intermediate projected light levels at a selected rate until the desired range of illumination levels is reached. The detection and the adjustment processes may form a closed feedback loop to repeatedly detect the ambient light and adjust the projected light level of the lighting device.

The controller determines a direction and a rate of adjustment based on a difference between the illumination measurements provided by the sensor and the desired range of illumination levels. For example, the rate of adjustment for decreasing the projected light level may be greater than the rate of adjustment for increasing the projected light level. As such, the lighting device may dim quickly (e.g., to rapidly reduce unwanted glare from reflected portions of the projected light when the detected ambient light is too high) and may brighten (e.g., light up) slowly (e.g., to permit a user's eyes to adjust to the brighter light). In another example, the rate of adjustment may be greater when the difference between the illumination measurements and the desired range of illumination levels is greater and the rate of adjustment may be less when the difference between the illumination measurements and the desired range of illumination levels is less. As such, the projected light level may change quickly when the illumination measurements are far away from the desired range and the change may slow down when the illumination measurements approach the desired range.

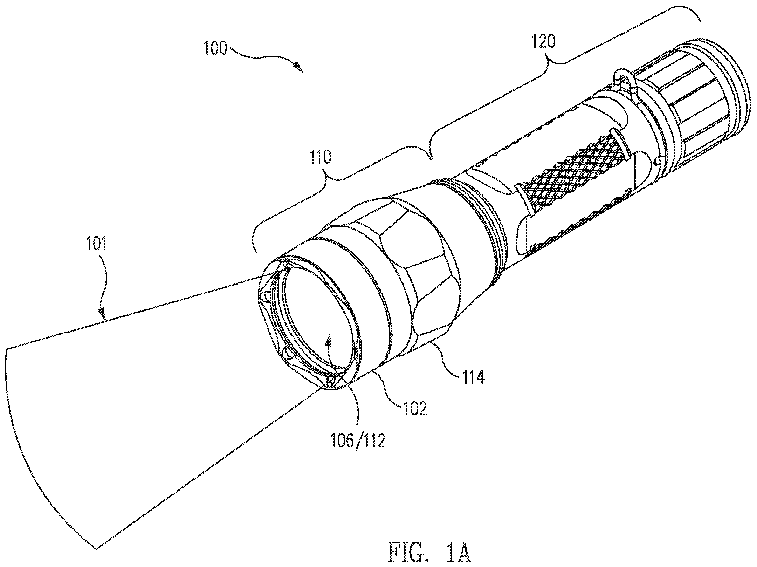

Referring now to the drawings wherein the showings are for purposes of illustrating embodiments of the present disclosure only, and not for purposes of limiting the same, Figs. 1A-D provide various views of a lighting device 100 in accordance with embodiments of the disclosure. As shown, lighting device 100 may be a flashlight including a head 110 and a body 120. Head 110 may include various components for producing and controlling light 101 (e.g., a light beam) directed toward an area of interest. Body 120 may include various components for providing power to produce the projected light.

Head 110 may include a bezel 102, a gasket 104, a planar lens 106, and an O-ring 108. The gasket 104 and the O-ring 108 may sandwich the planar lens 106 to provide cushioning to the planar lens 106. As such, the planar lens 106 may be protected from vibrations or breakage. The gasket 104 and the O-ring 108 also may operate as a seal to protect the internal components of the lighting device 100 from external elements, such as dust or moisture. The head 110 may also include a head casing 114 (e.g., a housing) with a threaded portion 116 at a distal end thereof. The threaded portion 116 of the head casing 114 may receive the bezel 102. For example, the bezel 102 may include internal threads and may be screwed onto the threaded portion 116 of the head casing 114.

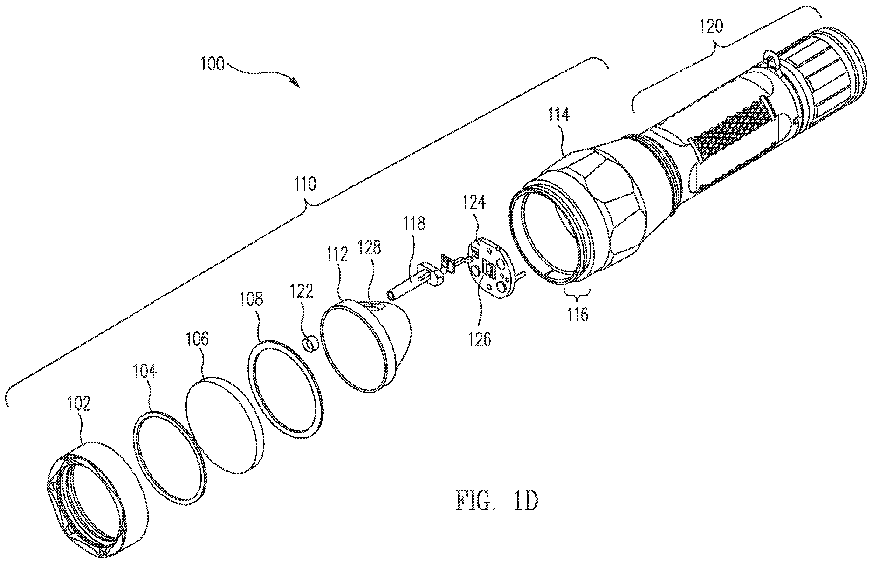

The head 110 may also include an optical element 112 to receive light projected from a light source 126 and shape the light into a desired beam shape (e.g., having a desired direction and/or beam spread). In some embodiments, optical element 112 may be implemented as an optical reflector, such as a mirror or a lens with light reflecting properties. In some embodiments, optical element 112 may be implemented as a total internal reflection (TIR) lens (e.g., as illustrated in Fig. 1D).

Light source 126 may be implemented, for example, as a light emitting diode (LED), an incandescent light bulb, a tungsten-halogen light bulb, a fluorescent light bulb, a high-intensity discharge light bulb, or any other singular or plural light source devices.

The planar lens 106 may be supported between the optical element 112 and the bezel 102 when the bezel 102 is attached to the head casing 114. The gasket 104 may be disposed between bezel 102 and the planar lens 106. The O-ring 108 may be disposed between the planar lens 106 and the optical element 112. In one embodiment, planar lens 106 may be a substantially flat (e.g., plano-plano) lens. It is contemplated that planar lens 106 may be implemented in accordance with any desired type of lens in other embodiments.

A printed circuit board (PCB) 124 may also be provided in the head casing 114. The PCB 124 may include light source 126. The PCB 124 may be disposed between the optical element 112 and the body 120. In some embodiments, the optical element 112 may include a center aperture and the light source 126 may be disposed at the center aperture to project light therethrough. In some embodiments, optical element 112 may be implemented as a solid optical element that directs light from the light source 126 toward planar lens 106 (e.g., using reflection, total internal reflections, or other techniques as appropriate). Planar lens 106 and optical element 112 may be formed of glass, plastic, or any other desired material. Indeed, any desired combination of material and types of lenses or reflectors may be used.

A sensor 118 (e.g., an optical sensor) may be provided and connected to the PCB 124. In some embodiments, a filter 122 may be disposed at a distal end of the sensor 118. The filter 122 may substantially filter out one or more wavebands, such as ultraviolet, infrared, and/or other non-visible light. As such, visible light may be provided to the sensor 118.

The sensor 118 may detect light (e.g., optionally filtered by filter 122) and provide signals (e.g., voltages and/or currents) in response thereto. For example, in some embodiments, such signals may correspond to illumination measurements based on the intensity (e.g., luminous flux in the case of visible light filtered by filter 122, or radiant flux in the case of unfiltered light) of ambient light detected by the sensor 118. Such intensity is also referred to herein as an illumination level. In some embodiments, the sensor 118 may mimic the sensitivity of a human eye. Although a single forward-facing sensor 118 is described herein, one or more additional sensors may be used to provide illumination measurements to a controller as described herein, and such sensors may face in any desired directions to detect light (e.g., forward, backward, sideways, up, down, and/or any desired angle).

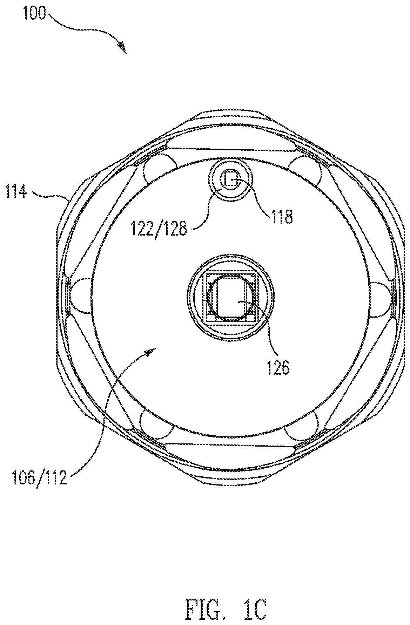

An aperture 128 may be formed, for example, in a side wall of the optical element 112. The sensor 118 may be disposed through the aperture 128. In particular, the sensor 118 and the filter 122 may be disposed to face toward the planar lens 106 to receive ambient light through the planar lens 106 as shown in the front view of Fig. 1C. For example, the sensor 118 and the filter 122 may face away from the light source 126, such that the sensor 118 does not detect light produced directly from the light source 126. In this regard, the sensor 118 may detect ambient light including, for example, light from various sources in the operating environment of lighting device 100 and/or reflected portions of the light projected by light source 126 (e.g., reflected by an external surface such as a wall, object, person, or other surface in the operating environment).

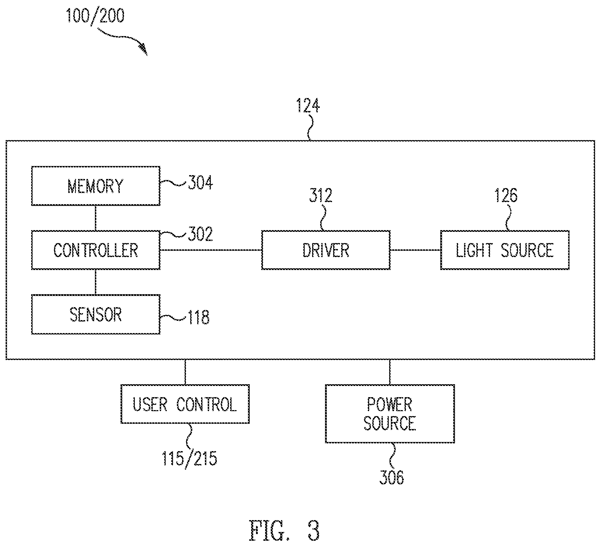

The PCB 124 may include a controller 302 (see Fig. 3) configured to control the level of light projected by the light source 126. For example, in some embodiments, controller 302 may adjust the projected light in accordance with a proportional-integral-derivative (PID) process. Controller 302 may receive the illumination measurements from the sensor 118 and adjust the projected light provided by the light source 126 in response thereto.

One or more power sources 306 (see Fig. 3) may be provided in the body 120 of the lighting device 100 and connected electrically to the PCB 124 to provide power to various components of lighting device 100. In various embodiments, power source 306 may be implemented, for example, by one or more batteries (e.g., rechargeable or non-rechargeable), solar cells, external power outlets, and/or other appropriate sources.

The controller 302 may control (e.g., adjust) the projected light level of the light source 126 by adjusting the amount of power, e.g., voltage and/or current, supplied to the light source 126. The controller 302 may repeatedly receive illumination measurements from sensor 118 and may adjust the projected light level of the light source 126 accordingly.

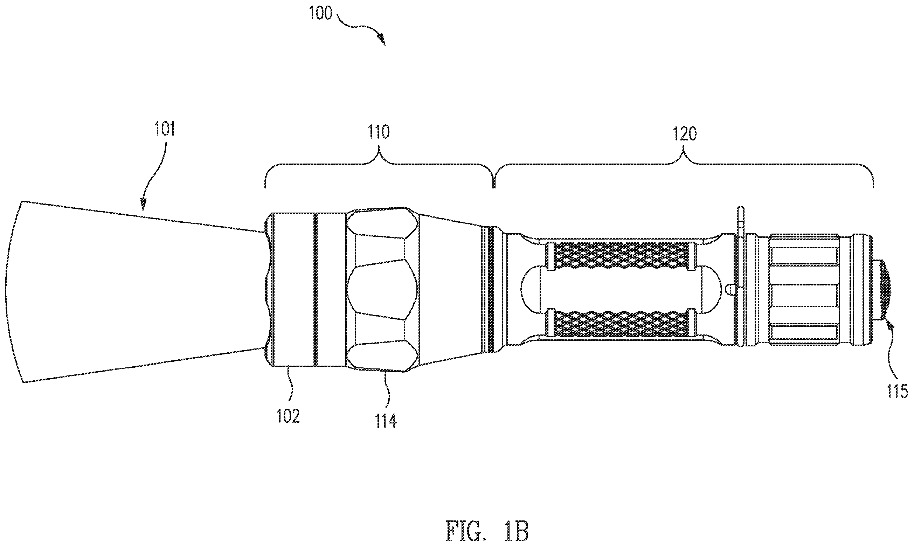

As shown in Fig. 1B, one or more user controls 115 may be provided. User control 115 may be connected to PCB 124 (see Fig. 3) to provide signals to controller 302 and/or other components to adjust the operation of lighting device 100. User control 115 may be implemented as any desired type of control such as, for example, one or more tailcap switches (e.g., a multi-stage tailcap switch as illustrated in Fig. 1B), rotary selector rings, push button switches, and/or other controls.

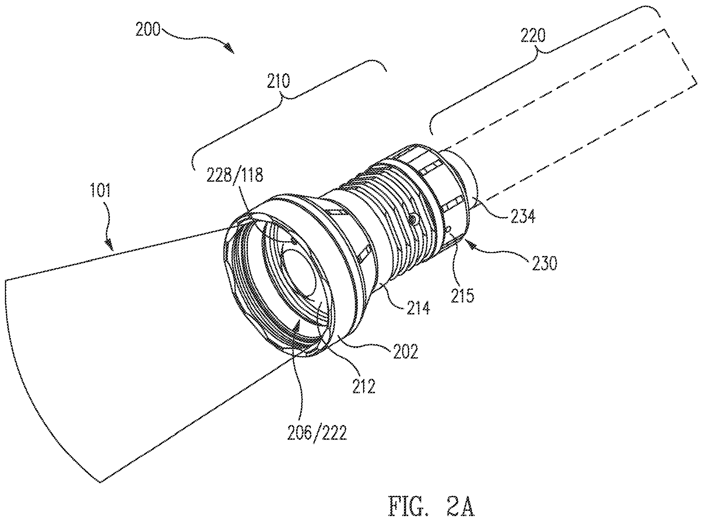

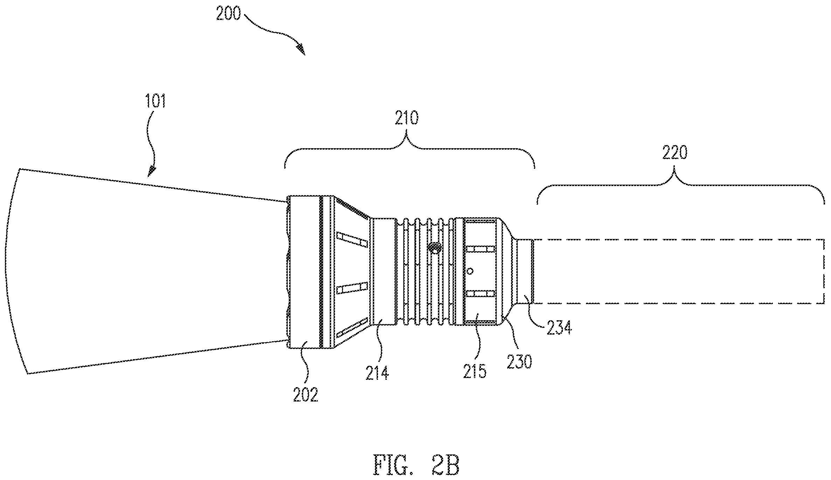

Figs. 2A-D provide various views of another lighting device 200 in accordance with embodiments of the disclosure. Lighting device 200 may include a head 210. Similar to head 110 of lighting device 100, head 210 may include various components for producing and controlling light 101 directed toward an area of interest. In various embodiments, head 210 may be configured to be coupled to any desired type of body 220 (e.g., illustrated in broken lines). In various embodiments, lighting device 200 may be carried manually by a user or attached to a wearable accessory of the user (e.g., a helmet, a headband, or other accessory), a weapon, and/or other devices.

Head 210 may include a bezel 202, an O-ring 204, a planar lens 206, a gasket 208, a front casing 214 having a threaded portion 216, a sensor 118, a PCB 124, and a light source 126, all of which may be implemented in the same or similar manner as corresponding components of lighting device 100.

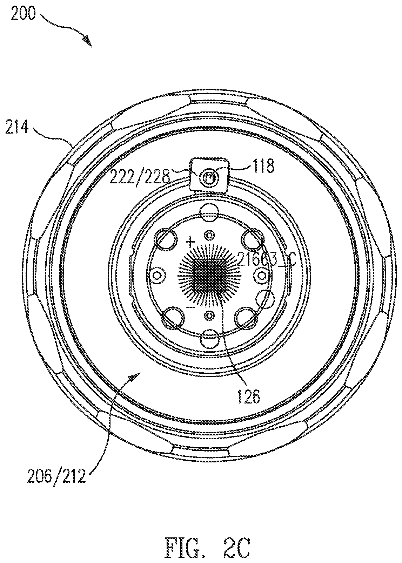

Head 210 also includes a ring sleeve 221, a filter 222, and an optical element 212. Ring sleeve 221 may hold filter 222 and optical element 212 in position relative to front casing 214. Filter 222 may operate in the same or similar manner as filter 122 previously described. Optical element 212 may be implemented in the same or similar manner as optical element 112 previously described. Optical element 212 includes an aperture 228 configured to receive sensor 118 therethrough. As a result, sensor 118 may be positioned within head 210 and configured to receive light through planar lens 206 and filter 222 (see Fig. 2C).

Head 210 also includes a power interface assembly 232 that connects to PCB 124 and receives power, for example, from batteries disposed in body 220.

Head 210 also includes a rear casing 230 that is received by a rear threaded portion 217 of front casing 214. For example, the rear casing 230 may include internal threads and may be screwed onto a rear threaded portion 217 of the front casing 214. The rear casing 230 may cover and enclose a rear end of the front casing 214. The rear casing 230 may include an electrical contact 234 configured to connect electrically to power elements (not shown), such as batteries, to provide power to the head 210.

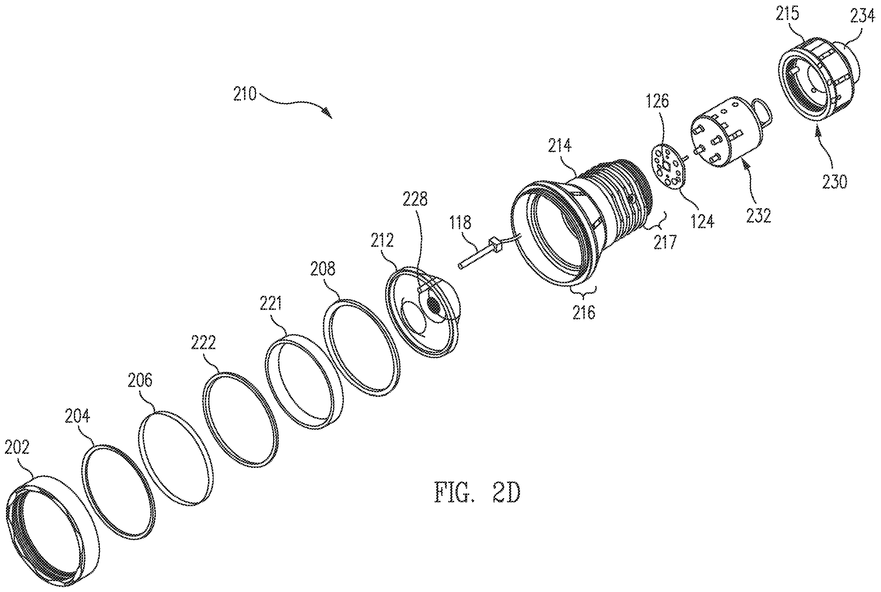

One or more user controls 215 may be provided in the same or similar fashion as user control 115 of lighting device 100. In Figs. 2A-B and 2D, user control 215 is implemented as a rotary selector ring.

Fig. 3 is a block diagram illustrating various components of a lighting device in accordance with an embodiment of the disclosure. In this regard, Fig. 3 identifies various electrical components that may be implemented in lighting device 100, lighting device 200, and/or other lighting devices implemented in accordance with the principles discussed herein.

In particular, Fig. 3 identifies various components that may be mounted on and/or otherwise electrically connected to PCB 124. For example, sensor 118, light source 126, controller 302, a memory 304, and a driver circuit 312 may be provided on PCB 124. Power source 306 may be connected to PCB 124 to provide power to one or more of the other illustrated components (e.g., through appropriate connections not shown for purposes of clarity). User control 115/215 may be connected to PCB 124 to provide signals to controller 302 and/or other components. Although several example connections are shown in Fig. 3, various connections may be provided between power source 306, user control 115/215, and/or the other illustrated components which are omitted for purposes of clarity.

As discussed, sensor 118 may detect light and provide signals (e.g., corresponding to illumination measurements) to controller 302 which may adjust the projected light provided by the light source 126 in response thereto. In various embodiments, the operation of controller 302 may be adjusted in response to signals provided by one or more user controls 115/215.

Controller 302 may be implemented, for example, as a microcontroller, microprocessor, a Field Programmable Gate Array (FPGA), an Application Specific Integrated Circuit (ASIC), and/or any appropriate combination of these or other types of devices.

Memory 304 (e.g., implemented as any appropriate type of volatile and/or non-volatile memory) may be used to store instructions and/or data to be used by controller 302. For example, in some embodiments, memory 304 may be implemented as a non-transistory machine-readable medium storing various instructions which may be executed by controller 302 to perform the various operations discussed herein. In some embodiments, such a machine-readable medium may be provided within controller 302 itself (e.g., as firmware and/or otherwise) and/or external to controller 302 and separate from memory 304.

Memory 304 may store data including, for example, illumination measurement data detected by sensor 118 (i.e., hysteresis data corresponding to one or more previously-detected illumination measurements), one or more predetermined settings (e.g., set by a user, a manufacturer, controller 302 itself, and/or otherwise) used by controller 302 to adjust the light projected by light source 126, and/or other data. As such, controller 302 may access and use the data stored by sensor 118 to control the operation of light source 126.

Driver circuit 312 receives signals from controller 302 to adjust the operation of light source 126. For example, driver circuit 312 may provide appropriate voltages and/or currents to light source 126 to selectively turn on, turn off, brighten, and/or dim light source 126 in response to signals received by driver circuit 312 from controller 302. In some embodiments, controller 302 may be connected directly to light source 126 without requiring the use of driver circuit 312. In either case, controller 302 may effectively adjust the operation of light source 126 by providing appropriate signals to driver circuit 312 and/or directly to light source 126.

In response to user manipulation, user control 115/215 provides user signals (e.g., encoded in the form of voltages, currents, and/or data) to controller 302 to select between various modes of operation for lighting device 100/200. In one mode, light source 126 may provide a constant maximum light output. In another mode, light source 126 may provide a constant low light output. In another mode, controller 302 may automatically adjust the light output by light source 126 through a plurality of light levels to maintain a desired overall illumination level (e.g., in some embodiments, the desired overall illumination level may be further selected by user control 115/215 and/or by controller 302). In another mode, light source 126 may be turned off or placed on standby. Other modes are also contemplated.

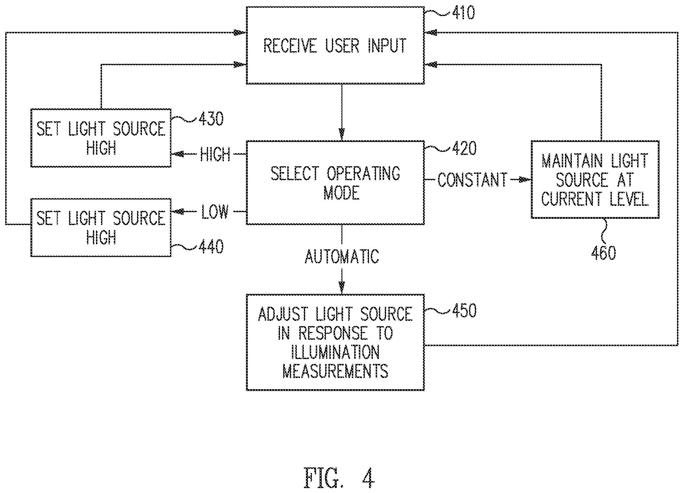

Fig. 4 is a flow chart illustrating a process for selecting an operating mode of lighting device 100/200 in accordance with an embodiment of the disclosure. In block 410, a user operates one or more user controls 115/215 to provide one or more signals as user inputs to controller 302. Such signals may switch lighting device 100/200 between various modes such as an off mode (e.g., where light source 126 is off), a standby mode (e.g., where light source 126 is off but ready to be turned on), various illumination modes (e.g., where light source 126 provides various levels of projected light), and/or other modes. Such signals may also include, for example, signals to adjust various settings such as an override condition setting discussed herein and/or other settings as appropriate.

In the example illustrated in Fig. 4, the particular user input provided in operation 410 identifies an illumination mode. In this regard, prior to block 410, lighting device 100/200 may already be turned on (e.g., in response to a previously received user input) and operating in a standby mode or an illumination mode (e.g., in response to another previously received user input). In block 420, controller 302 selects an illumination mode in response to the user signal provided in block 420. In the case of a high illumination mode (block 430), controller 302 signals driver circuit 312 to operate light source 126 at a high or maximum brightness. In the case of a low illumination mode (block 440), controller 302 signals driver circuit 312 to operate light source 126 at a low or minimum brightness.

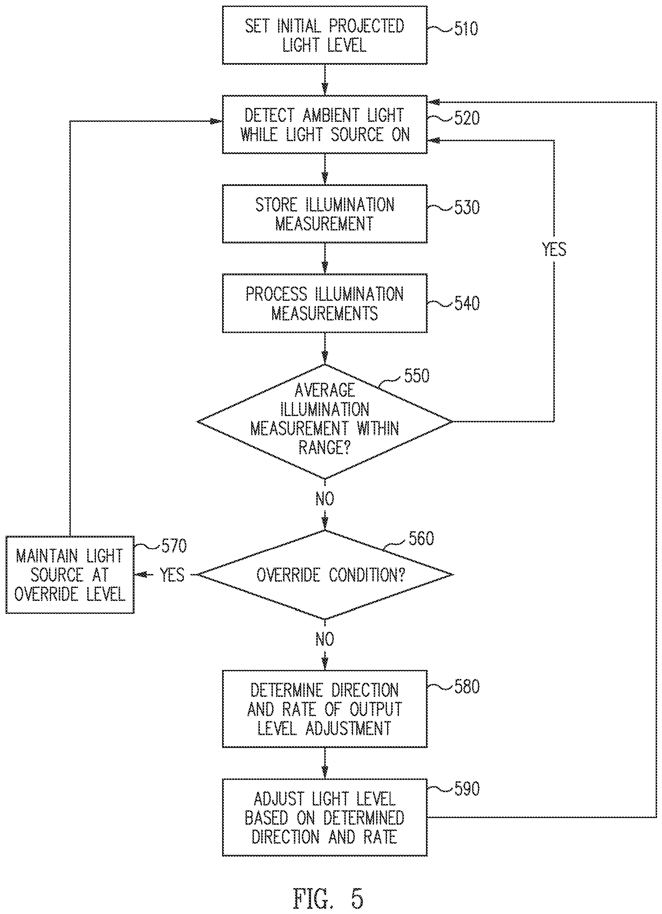

In the case of an automatic illumination mode (block 450), controller 302 signals driver circuit 312 to selectively adjust the brightness of light source 126 in response to illumination measurements provided by sensor 118, as discussed herein with regard to Figs. 5-8. In the case of a constant illumination mode (block 460), controller 302 signals driver circuit 312 to maintain the present brightness of light source 126. For example, if lighting device 100/200 was previously operating in the automatic illumination mode, switching to the constant illumination mode may disable automatic operation and force light source 126 to remain at the most recent brightness level set during the automatic illumination mode. After an illumination mode is selected (e.g., blocks 430 to 460), the process returns to block 410 where additional user inputs may be received.

Fig. 5 is a flow chart illustrating a process for controlling a projected light level of lighting device 100/200 in accordance with an embodiment of the disclosure. For example, the process of Fig. 5 may be during block 450 of Fig. 4.

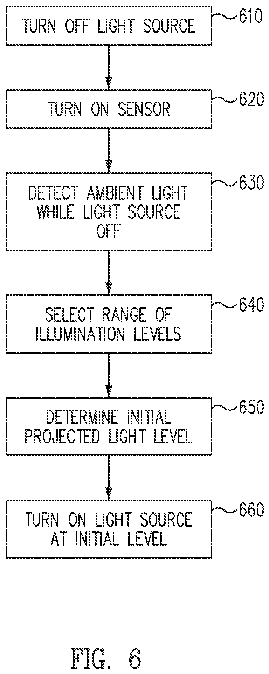

In block 510, controller 302 sets the initial projected light level for light source 126. In this regard, controller 302 may set light source 126 to an initial light level based on an initial illumination measurement corresponding to initial ambient light detected by sensor 118 while light source 126 is turned off. As such, light source 126 may be set to different initial light levels for different measured initial ambient light levels. In some embodiments, block 510 may be performed in accordance with the process of Fig. 6 which provides a flow chart illustrating an initialization process for controlling a projected light level of lighting device 100/200 in accordance with an embodiment of the disclosure.

Referring now to Fig. 6, in block 610, controller 302 may turn off light source 126 (e.g., if already turned on for a previously selected illumination mode). Accordingly, in some embodiments, the user may perceive a temporary switching off of light source 126 (e.g., from block 610 until block 660). In block 620, controller 302 turns on sensor 118 (e.g., if currently off).

In block 630, sensor 118 detects ambient light to provide an initial illumination measurement. In this regard, because light source 126 is turned off, the light detected during block 630 will correspond to ambient light in the operating environment of lighting device 100/200 without any additional light contribution from light source 126. In block 630, one or more initial illumination measurements may be taken. For example, in the case of multiple initial illumination measurements, controller 302 may receive (e.g., sample) the measurements at various time intervals (e.g., every 5 or 10 microseconds, or other intervals), and may use an average value, median value, high value, low value, and/or other value of the measurements as desired.

In block 640, controller 302 selects a range of desired illumination levels for light source 126 based on the one or more initial illumination measurements obtained in block 630. In this regard, it may be desirable to operate light source 126 such that the total ambient illumination detected by sensor 118 (corresponding to the combination of: (1) the initial ambient light; and (2) any additional projected light from light source 126 reflected back to sensor 118 when light source 126 is on) falls within one or more illumination level ranges.

For example, the following Table 1 identifies several different operating environments and corresponding user conditions, ranges of initial ambient illumination levels, ranges of desired total illumination levels, and initial projected light levels. In various embodiments, the illumination level ranges identified in Table 1 may be stored in memory 304, controller 302, and/or elsewhere (e.g., as a lookup table or as otherwise appropriate). Although three operating environments are identified in Table 1, any greater or lesser number of operating environments (and corresponding user conditions, ranges, and initial light levels) may be provided in various embodiments.

**Table 1**

| **Operating environment** | **User's condition** | **Initial ambient illumination level detected by sensor at 560nm wavelength while light source is off** | **Desired total ambient illumination level to be detected by sensor at 560nm wavelength while light source is on** | **Initial projected light level** |
|---|---|---|---|---|
| nighttime | eyes adjusted for night vision | 0 µW/m² to 28 µW/m² | 0 µW/m² to 200 µW/m² OR 200 µW/m² (single value) | 5 lumens |
| dark/shadow | eyes slightly adjusted for night vision | 28 µW 1m² to 200 µW 1m² | 200 µW 1m² to 300 µW 1m² OR 300 µW/m² (single value) | 15 lumens |
| daylight | eyes not adjusted for night vision | > 200 µW/m² | 300 µW 1m² to 500 µW 1m² OR 500 µW/m² (single value) | 40 lumens |

In some embodiments, the detected initial ambient illumination level may be scaled (e.g., linearly, logarithmically, and/or otherwise) to a corresponding desired total ambient illumination level. For example, in the case of linear scaling in Table 1, an initial ambient illumination level of 28 µW/m² may be scaled to a desired total ambient illumination level of 200 µW/m², while an initial ambient illumination level of 14 µW/m² may be scaled to a desired total ambient illumination level of 100 µW/m². Thus, for a given initial ambient illumination level, a corresponding desired total ambient illumination level may be determined. Although various ranges are identified in Table 1, a desired total ambient illumination level range may include a single value in some embodiments. For example, as also shown in Table 1, a range of initial ambient illumination levels may be associated with a single desired total ambient illumination value in such embodiments. Thus, although ranges of desired total ambient illumination levels are discussed herein, each of such ranges may be implemented by a corresponding single desired total ambient illumination value.

In Table 1, for each operating environment, the difference between the initial ambient illumination level and the corresponding desired total ambient illumination level corresponds to the portion of detected ambient light attributable to light source 126. In some embodiments, the detected ambient light attributable to light source 126 may be a portion of the light projected by light source 126 that is reflected back to and detected by sensor 118 while light source 126 is turned on. For example, in nighttime environments, light source 126 may be operated over a range of projected light levels such that sensor 118 detects a range of 0 µW/m² to 28 µW/m² attributable to the operating environment, and a range of 0 µW/m² to 172 µW/m² attributable to the reflected portion of the light projected by light source 126 (e.g., the sum of ranges 0 µW/m² to 28 µW/m² and 0 µW/m² to 172 µW/m² is 0 µW/m² to 200 µW/m²). It will be appreciated that other ranges may be attributable to the reflected light in other operating environments.

In some embodiments, the selected illumination levels may be further determined by a user. In this regard, controller 302 may choose a higher or lower desired illumination range in response to user input (e.g., received in block 410). For example, the user may wish to bias the initial and desired illumination level ranges high if the user desires overall brighter illumination (e.g., for daylight conditions), or bias them low if the user desires overall dimmer illumination (e.g., for nighttime tactical situations using night vision goggles).

The actual output level of light source 126 may be significantly higher or lower than the reflected light detected by sensor 118. For example, in an environment where light source 126 projects light into a generally empty target area, light source 126 may project light at an intensity greater than the illumination level detected by sensor 118 (e.g., very little projected light will be reflected back to sensor 118). As another example, in an environment where light source 126 projects light toward a reflective object or surface (e.g., a wall), light source 126 may project light at an intensity lower than the illumination level detected by sensor 118 (e.g., a large portion of the projected light will be reflected back to sensor 118 while sensor 118 further detects ambient light from other sources).

Thus, by detecting adjusting the light level of light source 126 in response to illumination measurements provided by sensor 118, the overall illumination level may be maintained in one or more desired ranges. For example, if light source 126 shines against a reflective surface in a target area, the projected light level can be adjusted down to reduce the amount of reflected light and thus prevent undesirable glare from dazzling a user's eyes. Similarly, if light source 126 is moved from the reflective surface toward a substantially empty target area, the projected light level can be adjusted up so that the user perceives the target area to be illuminated with the same overall illumination level as previously experienced by the user when shining against the reflective surface.

Thus, in block 640, controller 302 selects a range of desired illumination levels based on the initial ambient illumination level. As shown in Table 1, each selected range may correspond to a particular operating condition (e.g., an environment in which lighting device 100/200 is operated).

In block 650, determines (e.g., selects) an initial (e.g., default) projected light level for light source 126 based on the range of illumination levels selected in block 640. For example, in some embodiments, controller 302 may identify (e.g., in a lookup table, by performing calculations, and/or otherwise) a different initial projected light level for each range. Table 1 above identifies several example initial projected light levels for each range. In some embodiments, the initial projected light level is only a preliminary projected light level, and controller 302 may selectively adjust the projected light level in response to additional illumination measurements in accordance with various processes described herein.

In block 660, controller 302 turns on light source 126 at the initial projected light level identified in block 650. For example, in some embodiments, block 660 may include controller 302 providing appropriate signals to driver 312 and/or directly to light source 126 to set the initial projected light level.

In some embodiments, block 660 may be performed by gradually increasing the brightness of light source 126 until the initial projected light level is reached (e.g., to reduce the likelihood of glare or inadvertently dazzling the user's eyes). In other embodiments, light source 126 may be rapidly turned on at the initial projected light level (e.g., substantially instantaneously without any appreciable gradations perceived by the user).

Referring again to Fig. 5, in block 520, sensor 118 detects ambient light to provide one or more illumination measurements to controller 302. In various embodiments, sensor 118 may provide a single or multiple illumination measurements at various time intervals (e.g., every 5 or 10 microseconds or other intervals). Because light source 126 is now turned on (e.g., as a result of block 660), the ambient light illumination measurements taken in block 520 will include contributions from: the existing ambient light in the operating environment; and possibly a reflected portion of the light projected by light source 126. For example, while light source 126 is on, light projected from light source 126 may reflect off of one or more surfaces in the operating environment and may be received by sensor 118. As a result, the total ambient light received by sensor 118 may include existing ambient light and at least a reflected portion of the projected light.

In block 530, controller 302 stores (e.g., in memory 304 or elsewhere) the illumination measurements taken in block 520. The stored illumination measurements may be used as hysteresis data which identify multiple illumination measurements taken at different intervals and/or during successive iterations of block 520 (e.g., during various repetitions of the processing loops illustrated in Fig. 5).

In block 540, controller 302 selectively processes the stored illumination measurements. For example, in some embodiments, controller 302 may determine an average value of the stored illumination measurements to obtain an average illumination measurement. In this regard, such processing may be performed, for example, on all stored illumination measurements, a sliding window of recent illumination measurements taken over a particular time period or particular number of illumination measurements (e.g., the 30 most recent measurements). Thus, if some of the illumination measurements are abnormally low (e.g., as a result of shadows temporarily covering sensor 118) or abnormally high (e.g., as a result of a temporary reflection, a burst of light, electrical interference, sudden power disruptions, or other anomalies in the operating environment), the effects of these anomalies may be effectively reduced (e.g., smoothed out) in the average illumination measurement (e.g., thus reducing undesirable flickering of light source 126 in response to rapid adjustments based on anomalous illumination measurements). Although an average illumination measurement will be described herein, any appropriate processed illumination measurement (e.g., a median value and/or other processed value obtained in accordance with appropriate techniques) may be used. In some embodiments, a single (e.g., the most recent) illumination measurement is used in place of the average illumination measurement (e.g., processing block 540 may be skipped in some embodiments).

In block 550, controller 302 determines whether the average illumination measurement is within the selected range of illumination levels (e.g., previously determined in block 640). If yes, then this indicates that sum of the detected existing ambient light in the operating environment and any detected reflected portion of the light projected by light source 126 are within desired range of illumination levels. As such, the overall illumination level perceived by a user of lighting device 100/200 will be in an acceptable range appropriate for the operating environment. In this case, the process loops back to block 520 where additional illumination measurements are taken to permit ongoing adjustment of light source 126 if the average illumination measurement subsequently departs from the desired range of illumination levels. Thus, block 520 may be performed iteratively in periodic fashion (e.g., approximately every 5 or 10 microseconds in some embodiments) to repeatedly measure ambient light detected by sensor 118.

Also in block 550, if the average illumination measurement is outside the selected range of illumination levels, then the process continues to block 560 and controller 302 may selectively adjust the projected light level of light source 126 as described herein.

In block 560, controller 302 determines whether an override condition has been set. In some embodiments, a user may selectively enable an override condition that affects the operation of controller 302. For example, a user may operate one or more user controls 115/215 (e.g., in block 410) to provide one or more signals as user inputs to controller 302 to enable or disable the override condition (e.g., stored in memory 304 and/or elsewhere).

If enabled, the override condition may cause controller 302 to refrain from dimming and/or brightening light source 126 under certain conditions. In some embodiments, if one or more illumination measurements are higher (e.g., brighter) than the selected range of illumination levels, then this may indicate that the overall illumination level experienced by the user is currently too bright. However, in some cases, the user may not wish to dim light source 126 despite such measurements. For example, if a user is using lighting device 100/200 to illuminate a target area (e.g., a sidewalk, street, or other target area) at night, the user may desire to continue illuminating the target area using a sustained projected light level, regardless of whether additional ambient light is received by sensor 118 (e.g., from passing cars, streetlights, and/or other sources). Thus, if the override condition is set, then controller 302 may refrain from dimming light source 126 despite the detected additional ambient light. Similarly, an override condition may be used to prevent brightening of light source 126 under appropriate conditions. Thus, the automatic adjustment (e.g., brightening or dimming) of light source 126 may be interrupted in response to the override condition.

In some embodiments, the override condition may be set by controller 302 itself rather than in response to a user input. For example, controller 302 may process one or more illumination measurements (e.g., in block 540) and determine that an anomalous condition exists (e.g., sustained high illumination levels from a passing car, streetlight, and/or other sources; or sustained low illumination levels due to the absence of other light sources, or the absence of reflective surfaces, in the operating environment). In response, controller 302 may selectively set or disable the override condition.

Thus, if an override condition has been set, then controller 302 maintains light source 126 at its current level (e.g., an override level) in block 570, and the process loops back to block 520. Otherwise, the process continues to block 580.

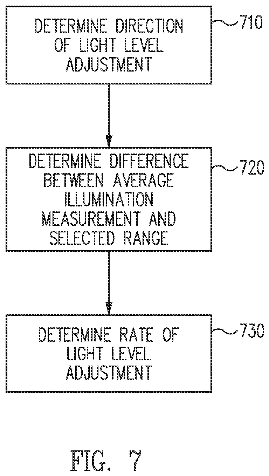

In block 580, controller 302 determines how light source 126 should be adjusted. In this regard, prior to block 580 controller 302 will have determined that the average illumination measurement is higher or lower than the desired illumination range, and will have also determined that no override condition exists. As a result, in block 580, controller 302 determines the direction (e.g., increasing or decreasing brightness) and rate (e.g., slow or fast) at which the projected light should be adjusted. In some embodiments, block 580 may be performed in accordance with the process of Fig. 7 which provides a flow chart illustrating a process for determining a direction and rate of projected light level adjustment of a lighting device in accordance with an embodiment of the disclosure.

Referring now to Fig. 7, at block 710, controller 302 determines a direction of the projected light level adjustment. For example, the controller 302 may compare the average illumination measurement with the selected range of illumination levels. If the average illumination measurement is lower than the selected range, then controller 302 may determine that the projected light level should be increased (e.g., a positive increasing direction). If the average illumination measurement is higher than the desired illumination range, then controller 302 may determine that the projected light level should be decreased (e.g., a negative decreasing direction).

At block 720, controller 302 determines a difference between the average illumination measurement and the selected range of illumination levels. For example, the controller 302 may subtract the average illumination measurement from corresponding scaled value (e.g., or single value in the case of a selected range having only a single value) within the selected range, or vice versa, to obtain a difference value.

At block 730, controller 302 determines a rate of projected light level adjustment based on the determined direction (block 710) and the determined difference (block 720). In this regard, controller 302 may increase and decrease the projected light level at different rates. For example, controller 302 may increase the projected light level at a slower rate than when decreasing the projected light level. In this regard, in some embodiments, the projected light level may be increased slowly to prevent a sudden increase in light intensity that may disturb or surprise the user (e.g., a sudden increase in light intensity may temporarily blind or dazzle the user's eyes, since the user's eyes may not have sufficient time to adapt to the brighter light in a nighttime or other dark environment).

In some embodiments, the projected light level may be decreased rapidly (e.g., faster than the rate of increase) to prevent the user from being similarly disturbed or surprised from a bright ambient environment. For example, if a user sweeps lighting device 100/200 across a reflective surface, or multiple lighting devices 100/200 are directed toward the same area, the projected light level may be rapidly decreased to maintain the desired overall illumination level and to prevent the user's eyes from being temporarily blinded or dazzled blinded by a sudden increase in ambient light.

In some embodiments, the rate of projected light level adjustment may be further based on the difference between the current illumination measurements and the selected illumination range. In this regard, the rate of projected light level adjustment may be greater for greater differences between the average illumination measurement and the selected illumination range. As such, when the average illumination measurement is far from the scaled value of the selected illumination range, the controller 302 may adjust the projected light level of the light source 308 relatively quickly. As the average illumination measurement approaches the scaled value of the selected illumination range (e.g., the difference is smaller), the controller 302 may slow down the rate of adjustment to gradually approach the desired illumination range and to prevent controller 302 from overshooting the desired illumination value.

Referring again to Fig. 5, in block 590, controller 302 adjusts the projected light level of light source 126 based on the direction and rate determined in block 580 (e.g., as a result of the process of Fig. 7). In this regard, controller 302 may set light source 126 to provide a new light level that is adjusted in the direction of the selected illumination range. Significantly, controller 302 is not required to instantly select the final desired projected light level in block 590 (e.g., the projected light level does not necessarily jump to its final value). Rather, controller 302 may transition the projected light through one or more projected light levels until the selected illumination range is reached. In various embodiments, such transitions may be performed discretely (e.g., controller 302 may cause light source 126 to step discretely between different levels) or continuously (e.g., controller 302 may cause light source 126 to continuously transition between different levels). In either case, in some embodiments, light source 126 may remain on during the processing loops performed from blocks 520 through 590. In this regard, light source 126 can remain on while being adjusted to various light levels (e.g., ambient light is detected while light source 126 remains on in block 520) and does not require any temporary switching off or other interruption in light 101 (e.g., whether perceptible or imperceptible to the user) during such blocks.

In some embodiments, controller 302 may make a single adjustment in the first iteration of block 590 to transition the projected light level to a new projected level closer to the selected illumination range, but not yet reaching the selected illumination range. The direction of change may depend on the direction determined in block 710. The amount of change (e.g., the step) may depend on the rate determined in block 720 (e.g., larger steps in light level may be used for greater rates of adjustment). In such embodiments, the process then returns to block 520 where another illumination measurement is performed. Thus, blocks 520 through 590 may be performed iteratively to continue adjusting the projected light level through a plurality of projected light levels until the average illumination measurement is within the selected range. Moreover, the adjustment performed in block 590 can be changed in response to new illumination measurements provided in successive iterations of block 520. As a result, the direction and/or rate of adjustment can be repeatedly updated and changed for each iteration of block 590.

In some embodiments, controller 302 may make a plurality of adjustments in each iteration of block 590. In this regard, controller 302 may transition the projected light level through a plurality of projected light levels before the process returns to block 520. For example, controller 302 may transition the projected light level in an appropriate direction and using successive steps (e.g., corresponding to a determined rate of adjustment) in a single iteration of block 590. The process then returns to block 520.

In some embodiments, block 590 may be performed by controller 302 in accordance with a closed loop feedback process, such as a PID process. In some embodiments, block 590 may be performed by an open loop process wherein the light level is selected from one or more lookup tables (e.g., stored in memory 304 or otherwise) based on various input criteria (e.g., current light level, direction of adjustment, rate of adjustment, and/or others).

During the process of Fig. 5, controller 302 may continue to monitor user control 115/215 for additional inputs. In this regard, if a user input is received that selects a different illumination mode during the process of Fig. 5, controller 302 may stop performing the process and instead return to block 420 of Fig. 4 to select a different illumination mode in response to the user input.

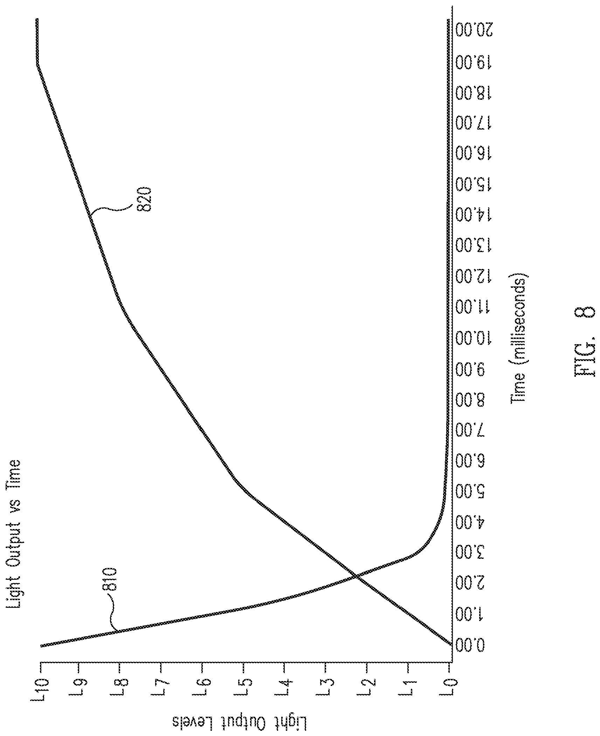

Fig. 8 illustrates projected light levels of lighting device 100/200 being adjusted over time in accordance with an embodiment of the disclosure. In particular, Fig. 8 illustrates plots 810 and 820 of the projected light output provided by light source 126 under different conditions over time during the process of Fig. 5. Plot 810 identifies a decreasing light output, and plot 820 identifies an increasing light output. As shown in Fig. 8, the light output dimming demonstrated by plot 810 has an overall faster adjustment rate than the light output brightening demonstrated by plot 820. For ease of reference, the projected light output levels are represented by sample levels L0 to L10 which may correspond, for example, to various illumination levels of light source 126.

Referring first to plot 810, from 0.00 to 20.00 milliseconds, blocks 520 through 590 are iteratively performed to reduce the projected light level from L10 through a plurality of intermediate light levels (e.g., L9 through LI) until light level L0 is reached (e.g., block 510 may have been previously performed to set an initial light level prior to the 0.00 millisecond time).

At 0.00 milliseconds, it may be determined (block 550) that the average illumination measurement is greater than the selected illumination range (e.g., selected in block 640). As a result, controller 302 begins decreasing the light level at 0.00 milliseconds. As shown, from 0.00 to 3.00 milliseconds, plot 810 exhibits a steep slope (e.g., a rapid decrease). This may be caused, for example, by a large difference between the average illumination measurement and the selected illumination range (e.g., a rapid rate of adjustment may have been determined in block 730).

From 3.00 to 4.500 milliseconds, plot 810 exhibits a reduced slope corresponding to a reduced rate of adjustment due to, for example, a smaller difference between the average illumination measurement and the selected illumination range. From 4.500 to 6.00 milliseconds, and again from 6.00 to time 7.00 milliseconds, plot 810 exhibits further reduced slopes as the average illumination measurement approaches the selected illumination range. At time 7.00, the average illumination measurement reaches the selected illumination range (e.g., level L0 in this case). Thus, as shown by plot 810, controller 302 continues to maintain light source 126 at level L0 (e.g., a low level), absent any changes in detected ambient light.

Referring now to plot 820, from 0.00 to 20.00 milliseconds, blocks 520 through 590 are iteratively performed to increase the projected light level from L0 through a plurality of intermediate light levels (e.g., L1 through L9) until light level L10 is reached (e.g., block 510 may have been previously performed to set an initial light level prior to 0.00 milliseconds).

For example, at 0.00 milliseconds, it may be determined (block 550) that the average illumination measurement is less than the selected illumination range (e.g., selected in block 640). As a result, controller 302 begins increasing the light level at time 0.00. As shown, from 0.00 to 4.50 milliseconds, plot 820 exhibits a positive slope that is less drastic (e.g., shallower) than the steep negative slope of plot 810. As discussed, the rate of increase may be slower than the rate of decrease to avoid inadvertently disturbing or surprising the user (e.g., a slow rate of adjustment may have been determined in block 730).

From 4.00 to 10.50 milliseconds, and again from 10.50 to 18.00 milliseconds, plot 820 exhibits even smaller slopes due to, for example, smaller differences between the average illumination measurement and the selected illumination range. At time 18.00, the average illumination measurement reaches the selected illumination range (e.g., level L10 in this case). Thus, as shown by plot 820, controller 302 continues to maintain light source 126 at level L10 (e.g., a high level), absent any changes in detected ambient light.

In various embodiments, the techniques described herein may be used to dynamically adjust the projected light level of light source 126 based on changing ambient conditions. Because the operation of controller 302 depends on the ambient light detected by sensor 118, these techniques may be implemented with a variety of types of light sources or power supplies, and may be used to adapt to various operating environments or situations. For example, when two or more lighting devices 100/200 are used and are pointed at the same area of interest, each lighting device 100/200 may automatically adjust to compensate for detected light projected from the other devices, such that the area of interest is not overly saturated and an overall illumination level may be maintained.

## Claims

1. A lighting device (100) comprising:
a light source (126) adapted to project light;
a sensor (118) adapted to provide illumination measurements based on ambient light detected by the sensor (118), wherein the ambient light comprises initial ambient light not created by the light source and any additional projected light from the light source (126) which is reflected back to the sensor (118) when the light source (126) is on;
**characterised in that** the lighting device (100) further comprises:
a memory (304) adapted to store the illumination measurements as hysteresis data, wherein said hysteresis data corresponds to one or more previously-detected illumination measurements, and to further store ranges of initial ambient illumination levels, ranges of desired illumination levels or single values of desired illumination, and initial projected light levels, each range of initial ambient illumination ranges being associated with (i) a corresponding range of desired illumination levels or a corresponding single value of desired illumination, and (ii) a corresponding initial projected light level; and
a controller (302) adapted to:
turn the light source (126) off and receive, from the sensor (118) an initial illumination measurement,
select a range of desired illumination levels or a single value of desired illumination for the light source (126) based on the initial illumination measurement and the corresponding range or single value of desired illumination stored in the memory,
set an initial light level for the light source (126) based on the initial illumination measurement and the corresponding initial projected light level stored in the memory and receive, from the sensor (118), illumination measurements while the light source is on,
store the illumination measurements as hysteresis data and process the stored hysteresis data to average the hysteresis data,
determine if the averaged hysteresis data is within the range of desired illumination levels or is equal to the single value of desired illumination, and if the averaged hysteresis data is determined to be outside the range or different to the single value, the controller is further adapter to:
determine a direction of projected light level adjustment based on a comparison of the averaged hysteresis data with the range of desired illumination levels or the single value of desired illumination,
determine a difference between the averaged hysteresis data and the range of desired illumination levels or the single value of desired illumination,
determine a rate at which the projected light should be adjusted based on the determined direction and the determined difference, and
adjust the projected light in the determined direction and at the determined rate to transition the projected light through a plurality of projected light levels until the desired illumination range or value is reached.

2. The lighting device (100) of claim 1, wherein, subsequent to determining if the averaged hysteresis data is within the range of desired illumination levels or is equal to the single value of desired illumination, and prior to determining a direction and rate of projected light level adjustment, the controller (302) is adapted to determine if an override condition has been set and, if an override condition has been set, the controller is adapted to interrupt adjustment of the projected light.

3. The lighting device (100) of claim 1, wherein the controller (302) is adapted to:
transition the projected light through decreasing projected light levels at a first rate;
transition the projected light through increasing projected light levels at a second rate; and
wherein the first rate is greater than the second rate to reduce glare perceived by a user of the lighting device (100).

4. The lighting device (100) of claim 1, wherein the rate is greater for greater determined differences.

5. The lighting device (100) of claim 1, wherein the memory (304) is adapted to store ranges of initial ambient illumination levels and corresponding single values of desired illumination, and the controller (302) is adapted to:
select a single value of desired illumination for the light source (126) based on the initial illumination measurement and the single value of desired illumination stored in the memory,
determine if the averaged hysteresis data is equal to the single value of desired illumination, and if it is not then the controller is further adapter to:
determine the direction of projected light level adjustment based on a comparison of the averaged hysteresis data with the single value of desired illumination,
determine the difference between the averaged hysteresis data and the single value of desired illumination,
determine a rate at which the projected light should be adjusted based on the determined direction and the determined difference, and
adjust the projected light in the determined direction and at the determined rate to transition the projected light through a plurality of projected light levels until the desired value is reached.

6. The lighting device (100) of claim 1, further comprising:
a filter (122) adapted to limit the ambient light and the reflected portion of the projected light detected by the sensor (118) to substantially only visible light;
wherein the lighting device (100) is a flashlight.

7. A method of operating a lighting device (100), the method comprising:
turning a light source (126) of the lighting device (100) off and receiving, from a sensor (118) of the lighting device (100), an initial illumination measurement;
selecting a range of desired illumination levels or a single value of desired illumination for the light source (126) based on the one or more initial illumination measurements and corresponding ranges of desired illumination levels or a corresponding single value of desired illumination stored in a memory;
setting an initial light level for the light source (126) based on the initial illumination measurement and a corresponding initial projected light level stored in the memory;
projecting light from the light source (126);
providing illumination measurements based on ambient light detected by the sensor (118) wherein the ambient light comprises initial ambient light not created by the light source and any additional projected light from the light source (126) which is reflected back to the sensor (118) when the light source (126) is on;
storing the illumination measurements as hysteresis data, wherein said hysteresis data corresponds to one or more previously-detected illumination measurements;
processing the stored hysteresis data to average the hysteresis data;
determining if the averaged hysteresis data is within the range of desired illumination levels or is equal to the single value of desired illumination, and if the averaged hysteresis data is determined to be outside the range or different to the single value then the method further comprises:
determining a direction of projected light level adjustment based on a comparison of the averaged hysteresis data with the range of desired illumination levels or the single value of desired illumination;
determining a difference between the averaged hysteresis data and the range of desired illumination levels or the single value of desired illumination;
determining a rate at which the projected light should be adjusted based on the determined direction and the determined difference; and
adjusting the projected light based on the determined direction and the determined rate to transition the projected light through a plurality of projected light levels until the desired illumination range or value is reached.

8. The method of claim 7, wherein subsequent to determining if the averaged hysteresis data is within the range of desired illumination levels or is equal to the single value of desired illumination, and prior to determining a direction and rate of projected light level adjustment the method further comprises:
determining if an override condition has been set, and
if an override condition has been set, the method further comprises interrupting the adjusting.

9. The method of claim 7, wherein:
the projected light transitions through decreasing projected light levels at a first rate;
the projected light transitions through increasing projected light levels at a second rate; and
wherein the first rate is greater than the second rate to reduce glare perceived by a user of the lighting device (100).

10. The method of claim 7,
wherein the rate is greater for greater determined differences.

11. The method of claim 7, wherein the method comprises selecting a single value of desired illumination for the light source (126) based on the one or more initial illumination measurements and a corresponding single value of desired illumination stored in a memory;
determining if the averaged hysteresis data is equal to the single value of desired illumination, and if the averaged hysteresis data is different to the single value then the method further comprises:
determining a direction of projected light level adjustment based on a comparison of the averaged hysteresis data with the single value of desired illumination;
determining a difference between the averaged hysteresis data and the single value of desired illumination;
determining a rate at which the projected light should be adjusted based on the determined direction and the determined difference; and
adjusting the projected light based on the determined direction and the determined rate to transition the projected light through a plurality of projected light levels until the desired value is reached.

12. The method of claim 7, further comprising:
disposing a filter at a distal end of the sensor and filtering the sensor to detect substantially only visible light;
wherein the lighting device (100) is a flashlight.

## Patentansprüche

1. Beleuchtungsvorrichtung (100), umfassend:
eine Lichtquelle (126), die dazu ausgelegt ist, Licht zu projizieren;
einen Sensor (118), der dazu ausgelegt ist, Beleuchtungsmessungen auf Grundlage von durch den Sensor (118) erfasstem Umgebungslicht bereitzustellen, wobei das Umgebungslicht anfängliches Umgebungslicht, das nicht durch die Lichtquelle erzeugt wurde, und beliebiges zusätzliches projiziertes Licht von der Lichtquelle (126) umfasst, das zu dem Sensor (118) zurück reflektiert wird, wenn die Lichtquelle (126) eingeschaltet ist;
**dadurch gekennzeichnet, dass** die Beleuchtungsvorrichtung (100) ferner Folgendes umfasst:
einen Speicher (304), der dazu ausgelegt ist, die Beleuchtungsmessungen als Hysteresedaten zu speichern, wobei die Hysteresedaten einer oder mehreren zuvor erfassten Beleuchtungsmessungen entsprechen, und ferner Bereiche anfänglicher Umgebungsbeleuchtungsniveaus, Bereiche gewünschter Beleuchtungsniveaus oder Einzelwerte gewünschter Beleuchtung und anfängliche projizierte Lichtniveaus zu speichern, wobei jeder Bereich anfänglicher Umgebungsbeleuchtungsbereiche (i) einem entsprechenden Bereich gewünschter Beleuchtungsniveaus oder einem entsprechenden Einzelwert gewünschter Beleuchtung und (ii) einem entsprechenden anfänglichen projizierten Lichtniveau zugeordnet ist; und
eine Steuerung (302), die dazu ausgelegt ist:
die Lichtquelle (126) auszuschalten und eine anfängliche Beleuchtungsmessung von dem Sensor (118) zu empfangen,
einen Bereich gewünschter Beleuchtungsniveaus oder einen Einzelwert gewünschter Beleuchtung für die Lichtquelle (126) auf Grundlage der anfänglichen Beleuchtungsmessung und des entsprechenden Bereichs oder Einzelwerts gewünschter Beleuchtung, die in dem Speicher gespeichert sind, auszuwählen,
ein anfängliches Lichtniveau für die Lichtquelle (126) auf Grundlage der anfänglichen Beleuchtungsmessung und des entsprechenden anfänglichen projizierten Lichtniveaus, die in dem Speicher gespeichert sind, einzustellen und Beleuchtungsmessungen von dem Sensor (118) zu empfangen, während die Lichtquelle eingeschaltet ist,
die Beleuchtungsmessungen als Hysteresedaten zu speichern und die gespeicherten Hysteresedaten zu verarbeiten, um die Hysteresedaten zu mitteln,
zu bestimmen, ob die gemittelten Hysteresedaten innerhalb des Bereichs gewünschter Beleuchtungsniveaus liegen oder gleich dem Einzelwert gewünschter Beleuchtung sind und wobei, wenn bestimmt wird, dass die gemittelten Hysteresedaten außerhalb des Bereichs liegen oder sich von dem Einzelwert unterscheiden, die Steuerung ferner dazu ausgelegt ist:
eine Richtung der Einstellung des projizierten Lichtniveaus auf Grundlage eines Vergleichs der gemittelten Hysteresedaten mit dem Bereich gewünschter Beleuchtungsniveaus oder dem Einzelwert gewünschte Beleuchtung zu bestimmen;
eine Differenz zwischen den gemittelten Hysteresedaten und dem Bereich gewünschter Beleuchtungsniveaus oder dem Einzelwert gewünschter Beleuchtung zu bestimmen, eine Rate, mit der das projizierte Licht eingestellt werden sollte, auf Grundlage der bestimmten Richtung und der bestimmten Differenz zu bestimmen, und das projizierte Lichts in der bestimmten Richtung und mit der bestimmten Rate einzustellen, um das projizierte Licht durch eine Vielzahl von projizierten Lichtniveaus zu überführen, bis der gewünschte Beleuchtungsbereich oder -wert erreicht ist.

2. Beleuchtungsvorrichtung (100) nach Anspruch 1, wobei im Anschluss an das Bestimmen, ob die gemittelten Hysteresedaten innerhalb des Bereichs gewünschter Beleuchtungsniveaus liegen oder gleich dem Einzelwert gewünschter Beleuchtung sind, und vor dem Bestimmen einer Richtung und Rate der Einstellung des projizierten Lichtniveaus die Steuerung (302) dazu ausgelegt ist, zu bestimmen, ob eine Übersteuerungsbedingung eingestellt wurde und wenn eine Übersteuerungsbedingung eingestellt wurde, die Steuerung dazu ausgelegt ist, die Einstellung des projizierten Lichts zu unterbrechen.

3. Beleuchtungsvorrichtung (100) nach Anspruch 1, wobei die Steuerung (302) dazu ausgelegt ist:
das projizierte Licht durch abnehmende projizierte Lichtniveaus mit einer ersten Rate zu überführen; das projizierte Licht durch zunehmende projizierte Lichtniveaus mit einer zweiten Rate zu überführen;
und wobei die erste Rate größer als die zweite Rate ist, um die durch einen Benutzer der Beleuchtungsvorrichtung (100) wahrgenommene Blendung zu verringern.

4. Beleuchtungsvorrichtung (100) nach Anspruch 1, wobei die Rate für größere bestimmte Differenzen größer ist.

5. Beleuchtungsvorrichtung (100) nach Anspruch 1, wobei der Speicher (304) dazu ausgelegt ist, Bereiche anfänglicher Umgebungsbeleuchtungsniveaus und entsprechende Einzelwerte gewünschter Beleuchtung zu speichern, und die Steuerung (302) dazu ausgelegt ist:
einen Einzelwert gewünschter Beleuchtung für die Lichtquelle (126) auf Grundlage der anfänglichen Beleuchtungsmessung und des Einzelwerts gewünschter Beleuchtung, die in dem Speicher gespeichert sind, auszuwählen,
zu bestimmen, ob die gemittelten Hysteresedaten gleich dem Einzelwert gewünschter Beleuchtung sind, und wobei, wenn dies nicht der Fall ist, die Steuerung ferner dazu ausgelegt ist:
die Richtung der Einstellung des projizierten Lichtniveaus auf Grundlage eines Vergleichs der gemittelten Hysteresedaten mit dem Einzelwert gewünschter Beleuchtung zu bestimmen,
die Differenz zwischen den gemittelten Hysteresedaten und dem Einzelwert gewünschter Beleuchtung zu bestimmen,
eine Rate, mit der das projizierte Licht eingestellt werden sollte, auf Grundlage der bestimmten Richtung und der bestimmten Differenz zu bestimmen, und
das projizierte Licht in der bestimmten Richtung und mit der bestimmten Rate einzustellen, um das projizierte Licht durch eine Vielzahl von projizierten Lichtniveaus zu überführen, bis der gewünschte Wert erreicht ist.

6. Beleuchtungsvorrichtung (100) nach Anspruch 1, ferner umfassend:
einen Filter (122), der dazu ausgelegt ist, das Umgebungslicht und den reflektierten Teil des von dem Sensor (118) erfassten projizierten Lichts auf im Wesentlichen nur sichtbares Licht zu beschränken; wobei die Beleuchtungsvorrichtung (100) eine Taschenlampe ist.

7. Verfahren zum Betreiben einer Beleuchtungsvorrichtung (100), wobei das Verfahren Folgendes umfasst: Ausschalten einer Lichtquelle (126) der Beleuchtungsvorrichtung (100) und Empfangen
einer anfänglichen Beleuchtungsmessung von einem Sensor (118) der Beleuchtungsvorrichtung (100);
Auswählen eines Bereichs gewünschter Beleuchtungsniveaus oder eines Einzelwerts gewünschter Beleuchtung für die Lichtquelle (126) auf Grundlage der einen oder mehreren anfänglichen Beleuchtungsmessungen und von entsprechenden Bereichen gewünschter Beleuchtungsniveaus oder eines entsprechenden Einzelwerts gewünschter Beleuchtung, die in dem Speicher gespeichert sind;
Einstellen eines anfänglichen Lichtniveaus für die Lichtquelle (126) auf Grundlage der anfänglichen Beleuchtungsmessung und eines entsprechenden anfänglichen projizierten Lichtniveaus, die in dem Speicher gespeichert sind; Projizieren von Licht von der Lichtquelle (126);
Bereitstellen von Beleuchtungsmessungen auf Grundlage von durch den Sensor (118) erfasstem Umgebungslicht, wobei das Umgebungslicht anfängliches Umgebungslicht, das nicht durch die Lichtquelle erzeugt wurde, und beliebiges zusätzliches projiziertes Licht von der Lichtquelle (126) umfasst, das zu dem Sensor (118) zurück reflektiert wird, wenn die Lichtquelle (126) eingeschaltet ist;
Speichern der Beleuchtungsmessungen als Hysteresedaten, wobei die Hysteresedaten einer oder mehreren zuvor erfassten Beleuchtungsmessungen entsprechen;
Verarbeiten der gespeicherten Hysteresedaten, um die Hysteresedaten zu mitteln; Bestimmen, ob die gemittelten Hysteresedaten innerhalb des Bereichs gewünschter Beleuchtungsniveaus liegen oder gleich dem Einzelwert gewünschter Beleuchtung sind und wobei, wenn bestimmt wird, dass die gemittelten Hysteresedaten außerhalb des Bereichs liegen oder sich von dem Einzelwert unterscheiden, das Verfahren dann ferner Folgendes umfasst:
Bestimmen einer Richtung der Einstellung des projizierten Lichtniveaus auf Grundlage eines Vergleichs der gemittelten Hysteresedaten mit dem Bereich gewünschter Beleuchtungsniveaus oder dem Einzelwert gewünschte Beleuchtung;
Bestimmen einer Differenz zwischen den gemittelten Hysteresedaten und dem Bereich gewünschter Beleuchtungsniveaus oder dem Einzelwert gewünschter Beleuchtung;
Bestimmen einer Rate, mit der das projizierte Licht eingestellt werden sollte, auf Grundlage der bestimmten Richtung und der bestimmten Differenz; und
Einstellen des projizierten Lichts auf Grundlage der bestimmten Richtung und der bestimmten Rate, um das projizierte Licht durch eine Vielzahl von projizierten Lichtniveaus zu überführen, bis der gewünschte Wert erreicht ist.

8. Verfahren nach Anspruch 7, wobei im Anschluss an das Bestimmen, ob die gemittelten Hysteresedaten innerhalb des Bereichs gewünschter Beleuchtungsniveaus liegen oder gleich dem Einzelwert gewünschter Beleuchtung sind, und vor dem Bestimmen einer Richtung und einer Rate der Einstellung des projizierten Lichtniveaus das Verfahren ferner Folgendes umfasst:
Bestimmen, ob eine Übersteuerungsbedingung eingestellt wurde und wenn eine Übersteuerungsbedingung eingestellt wurde, das Verfahren ferner Unterbrechen der Einstellung umfasst.

9. Verfahren nach Anspruch 7, wobei:
das projizierte Licht durch abnehmende projizierte Lichtniveaus mit einer ersten Rate übergeht; das projizierte Licht durch zunehmende projizierte Lichtniveaus mit einer zweiten Rate übergeht; und
wobei die erste Rate größer als die zweite Rate ist, um die durch einen Benutzer der Beleuchtungsvorrichtung (100) wahrgenommene Blendung zu verringern.

10. Verfahren nach Anspruch 7, wobei die Rate für größere bestimmte Differenzen größer ist.

11. Verfahren nach Anspruch 7, wobei das Verfahren Folgendes umfasst: Auswählen eines Einzelwerts gewünschter Beleuchtung für die Lichtquelle (126) auf Grundlage der einen oder mehreren anfänglichen Beleuchtungsmessungen und eines entsprechenden Einzelwerts gewünschter Beleuchtung, die in dem Speicher gespeichert sind;
Bestimmen, ob die gemittelten Hysteresedaten gleich dem Einzelwert gewünschter Beleuchtung sind und wobei, wenn sich die gemittelten Hysteresedaten von dem Einzelwert unterscheiden, das Verfahren ferner Folgendes umfasst:
Bestimmen einer Richtung der Einstellung des projizierten Lichtniveaus auf Grundlage eines Vergleichs der gemittelten Hysteresedaten mit dem Einzelwert gewünschter Beleuchtung;
Bestimmen einer Differenz zwischen den gemittelten Hysteresedaten und dem Einzelwert gewünschter Beleuchtung;
Bestimmen einer Rate, mit der das projizierte Licht eingestellt werden sollte, auf Grundlage der bestimmten Richtung und der bestimmten Differenz; und
Einstellen des projizierten Lichts auf Grundlage der bestimmten Richtung und der bestimmten Rate, um das projizierte Licht durch eine Vielzahl von projizierten Lichtniveaus zu überführen, bis der gewünschte Wert erreicht ist.

12. Verfahren nach Anspruch 7, ferner umfassend: Anordnen eines Filters an einem distalen Ende des Sensors und Filtern des Sensors, um im Wesentlichen nur sichtbares Licht zu erfassen; wobei die Beleuchtungsvorrichtung (100) eine Taschenlampe ist.

## Revendications

1. Dispositif d'éclairage (100) comprenant : une source de lumière (126) adaptée pour projeter de la lumière ;
un capteur (118) adapté pour fournir des mesures d'éclairement sur la base de la lumière ambiante détectée par le capteur (118), ladite lumière ambiante comprenant une lumière ambiante initiale qui n'est pas créée par la source de lumière et toute lumière projetée supplémentaire en provenance de la source de lumière (126) qui est réfléchie vers le capteur (118) lorsque la source de lumière (126) est allumée ; **caractérisé en ce que** le dispositif d'éclairage (100) comprend en outre :
une mémoire (304) adaptée pour stocker les mesures d'éclairement sous forme de données d'hystérésis, lesdites données d'hystérésis correspondant à une ou plusieurs mesures d'éclairement précédemment détectées, et pour stocker en outre des plages de niveaux d'éclairement ambiant initiaux, des plages de niveaux d'éclairement souhaités ou des valeurs uniques d'éclairement souhaité et des niveaux de lumière projetée initiaux, chaque plage des plages d'éclairement ambiant initiaux étant associée à (i) une plage correspondante de niveaux d'éclairement souhaités ou une valeur unique correspondante d'éclairement souhaité, et (ii) un niveau de lumière projeté initial correspondant ; et
un dispositif de commande (302) adapté pour :
éteindre la source de lumière (126) et recevoir, en provenance du capteur (118), une mesure d'éclairement initiale,
sélectionner une plage de niveaux d'éclairement souhaités ou une valeur unique d'éclairement souhaité pour la source de lumière (126) sur la base de la mesure d'éclairement initiale et de la plage ou de la valeur unique correspondante de l'éclairement souhaité stockée dans la mémoire,
définir un niveau de lumière initial pour la source de lumière (126) sur la base de la mesure d'éclairement initiale et du niveau de lumière projeté initial correspondant stocké dans la mémoire et recevoir, en provenance du capteur (118), des mesures d'éclairement pendant que la source de lumière est allumée,
stocker les mesures d'éclairement sous forme de données d'hystérésis et traiter les données d'hystérésis stockées pour calculer la moyenne des données d'hystérésis,
déterminer si les données d'hystérésis moyennées se situent dans la plage des niveaux d'éclairement souhaités ou sont égales à la valeur unique d'éclairement souhaité, et si les données d'hystérésis moyennées sont déterminées comme étant en dehors de la plage ou différentes de la valeur unique, le dispositif de commande est un autre adaptateur pour :
déterminer une direction de réglage de niveau de lumière projetée sur la base d'une comparaison des données d'hystérésis moyennées avec la plage des niveaux d'éclairement souhaités ou la valeur unique de l'éclairement souhaité,
déterminer une différence entre les données d'hystérésis moyennées et la plage des niveaux d'éclairement souhaités ou la valeur unique de l'éclairement souhaité, déterminer une vitesse à laquelle la lumière projetée doit être réglée sur la base de la direction déterminée et de la différence déterminée, et régler la lumière projetée dans la direction déterminée et à la vitesse déterminée pour faire passer la lumière projetée par une pluralité de niveaux de lumière projetée jusqu'à ce que la plage ou la valeur d'éclairement souhaité soit atteinte.

2. Dispositif d'éclairage (100) selon la revendication 1, après avoir déterminé si les données d'hystérésis moyennées se trouvent dans la plage de niveaux d'éclairement souhaités ou sont égales à la valeur unique d'éclairement souhaité, et avant de déterminer une direction et une vitesse de réglage de niveau de lumière projetée, ledit dispositif de commande (302) étant adapté pour déterminer si une condition d'annulation a été établie et, si une condition d'annulation a été établie, ledit dispositif de commande étant adapté pour interrompre le réglage de la lumière projetée.

3. Dispositif d'éclairage (100) selon la revendication 1, ledit dispositif de commande (302) étant adapté pour :
faire passer la lumière projetée par des niveaux de lumière projetée décroissants à une première vitesse ; faire passer la lumière projetée par des niveaux de lumière projetée croissants à une seconde vitesse ;
et ladite première vitesse étant supérieure à la seconde vitesse pour réduire l'éblouissement perçu par un utilisateur du dispositif d'éclairage (100).

4. Dispositif d'éclairage (100) selon la revendication 1, ladite vitesse étant plus élevée pour des différences déterminées plus élevées.

5. Dispositif d'éclairage (100) selon la revendication 1, ladite mémoire (304) étant adaptée pour stocker des plages de niveaux d'éclairement ambiant initiaux et des valeurs uniques correspondantes d'éclairement souhaité, et ledit dispositif de commande (302) étant adapté pour :
sélectionner une valeur unique d'éclairement souhaité pour la source de lumière (126) sur la base de la mesure d'éclairement initiale et de la valeur unique d'éclairement souhaité stockée dans la mémoire,
déterminer si les données d'hystérésis moyennées sont égales à la valeur unique d'éclairement souhaité, et si ce n'est pas le cas, ledit dispositif de commande étant en outre un adaptateur pour :
déterminer la direction de réglage de niveau de lumière projetée sur la base d'une comparaison des données d'hystérésis moyennées avec la valeur unique de l'éclairement souhaité,
déterminer la différence entre les données d'hystérésis moyennées et la valeur unique de l'éclairement souhaité,
déterminer une vitesse à laquelle la lumière projetée doit être réglée sur la base de la direction déterminées et de la différence déterminée , et
régler la lumière projetée dans la direction déterminée et à la vitesse déterminée pour faire passer la lumière projetée par une pluralité de niveaux de lumière projetée jusqu'à ce que la valeur souhaitée soit atteinte.

6. Dispositif d'éclairage (100) selon la revendication 1, comprenant en outre :
un filtre (122) adapté pour limiter la lumière ambiante et la partie réfléchie de la lumière projetée détectée par le capteur (118) à quasi uniquement la lumière visible; le dispositif d'éclairage (100) étant une lampe de poche.

7. Procédé de fonctionnement d'un dispositif d'éclairage (100), le procédé comprenant : la mise hors tension d'une source de lumière (126) du dispositif d'éclairage (100) et la réception, en provenance d'un
capteur (118) du dispositif d'éclairage (100), d'une mesure d'éclairement initiale ;
la sélection d'une plage de niveaux d'éclairement souhaités ou d'une valeur unique d'éclairement souhaité pour la source de lumière (126) sur la base de la ou des mesures d'éclairement initiales et des plages correspondantes de niveaux d'éclairement souhaités ou d'une valeur unique correspondante de l'éclairement souhaité stockée dans une mémoire ;
la définition d'un niveau de lumière initial pour la source de lumière (126) sur la base de la mesure d'éclairement initiale et d'un niveau de lumière projetée initial correspondant stocké dans la mémoire ; la projection de la lumière à partir de la source de lumière (126) ;
la fourniture de mesures d'éclairement sur la base de la lumière ambiante détectée par le capteur (118), ladite lumière ambiante comprenant une lumière ambiante initiale qui n'est pas créée par la source de lumière et toute lumière projetée supplémentaire provenant de la source de lumière (126) qui est réfléchie vers le capteur (118) lorsque la source de lumière (126) est allumée ;
le stockage des mesures d'éclairement sous forme de données d'hystérésis, lesdites données d'hystérésis correspondant à une ou plusieurs mesures d'éclairement précédemment détecté ;
le traitement des données d'hystérésis stockées pour calculer la moyenne des données d'hystérésis ; la détermination pour savoir si les données d'hystérésis moyennées se situent dans la plage de niveaux d'éclairement souhaités ou sont égales à la valeur unique d'éclairement souhaité, et si les données d'hystérésis moyennées sont déterminées comme étant en dehors de la plage ou différentes de la valeur unique, alors le procédé comprend en outre :
la détermination d'une direction de réglage du niveau de lumière projetée sur la base d'une comparaison des données d'hystérésis moyennées avec la plage de niveaux d'éclairement souhaités ou la valeur unique d'éclairement souhaité ;
la détermination d'une différence entre les données d'hystérésis moyennées et la plage de niveaux d'éclairement souhaités ou la valeur unique de l'éclairement souhaité ;
la détermination d'une vitesse à laquelle la lumière projetée doit être réglée sur la base de la direction déterminée et de la différence déterminée ; et
le réglage de la lumière projetée sur la base de la direction déterminée et de la vitesse déterminée pour faire passer la lumière projetée par une pluralité de niveaux de lumière projetée jusqu'à ce que la plage ou la valeur d'éclairement souhaité soit atteinte.

8. Procédé selon la revendication 7, après la détermination pour savoir si les données d'hystérésis moyennées sont dans la plage de niveaux d'éclairement souhaités ou sont égales à la valeur unique d'éclairement souhaité, et avant la détermination d'une direction et d'une vitesse de réglage de niveau de lumière projetée, le procédé comprend en outre :
la détermination pour savoir si une condition d'annulation a été définie, et si une condition d'annulation a été définie, le procédé comprend en outre l'interruption du réglage.

9. Procédé selon la revendication 7,
ladite lumière projetée passant par des niveaux de lumière projetée décroissants à une première vitesse ; la lumière projetée passant par des niveaux de lumière projetés croissants à une seconde vitesse ; et
ladite première vitesse étant supérieure à la seconde vitesse pour réduire l'éblouissement perçu par un utilisateur du dispositif d'éclairage (100).

10. Procédé selon la revendication 7, ladite vitesse étant plus élevée pour des différences déterminées plus élevées.

11. Procédé selon la revendication 7, ledit procédé comprenant la sélection d'une valeur unique d'éclairement souhaité pour la source de lumière (126) sur la base de la ou des mesures d'éclairement initiales et d'une valeur unique correspondante d'éclairement souhaité stockée dans une mémoire ;
la détermination pour savoir si les données d'hystérésis moyennées sont égales à la valeur unique de l'éclairement souhaité, et si les données d'hystérésis moyennées sont différentes de la valeur unique, alors le procédé comprend en outre :
la détermination d'une direction de réglage de niveau de lumière projetée sur la base d'une comparaison des données d'hystérésis moyennées avec la valeur unique d'éclairement souhaité ;
la détermination d'une différence entre les données d'hystérésis moyennées et la valeur unique de l'éclairement souhaité ;
la détermination d'une vitesse à laquelle la lumière projetée doit être réglée sur la base de la direction déterminée et de la différence déterminée ; et
le réglage de la lumière projetée sur la base de la direction déterminée et de la vitesse déterminée pour faire passer la lumière projetée par une pluralité de niveaux de lumière projetée jusqu'à ce que la valeur souhaitée soit atteinte.

12. Procédé selon la revendication 7, comprenant en outre : la disposition d'un filtre à une extrémité distale du capteur et le filtrage du capteur pour détecter quasi uniquement la lumière visible ; ledit dispositif d'éclairage (100) étant une lampe de poche.
